# EUROPÄISCHE PATENTANMELDUNG

(11) **EP 1 810 857 A1**
(43) Veröffentlichungstag der Anmeldung: **25.07.2007**
(21) Anmeldenummer: 06026246.6
(22) Anmeldetag: 19.12.2006
(51) Int. Cl.: B60H 1/34

(54) **Ausströmdüse mit Lamellen**

(30) Priorität: 19.01.2006 DE 102006002663
(71) Anmelder: GM Global Technology Operations, Inc., Detroit, MI 48265-3000 (US)
(72) Erfinder: Lummitsch, Stefan, 65549 Limburg (DE); Marutschke, Andreas, 65428 Rüsselsheim (DE)
(74) Vertreter: Daniel, Ulrich W.P.

(57) **Zusammenfassung**

Eine Ausströmdüse (1) für ein Fluid weist einen von einem Gehäuse (2) gebildeten Strömungskanal (3) und mehrere im Bereich einer Austrittsöffnung (4) vorgesehene parallele Lamellen (5) zur Ausrichtung eines Fluidstroms auf, wobei die Lamellen (5) zur gemeinsamen Verschwenkbarkeit mit einer Koppelstange (6) mechanisch gekoppelt sind. Um einen Fluidstrom in eine gewünschte Richtung zu leiten, weisen die Lamellen (5) in Längsrichtung einen zweiteiligen Aufbau auf.

## Beschreibung

Die Erfindung bezieht sich auf eine Ausströmdüse für ein Fluid mit einem von einem Gehäuse gebildeten Strömungskanal und mehreren im Bereich einer Austrittsöffnung vorgesehenen parallelen Lamellen zur Ausrichtung eines Fluidstroms, wobei die Lamellen zur gemeinsamen Verschwenkbarkeit mit einer Koppelstange mechanisch gekoppelt sind.

Insbesondere aus der Kraftfahrzeugtechnik sind Ausströmdüsen in verschiedenen Ausführungsformen bekannt. Mit ihnen wird ein Fluid, beispielsweise die von einer Klima- und Belüftungsanlage in gewünschter Weise temperierte Luft, in eine gewünschte Richtung in einen Innenraum des Kraftfahrzeugs hinein ausgerichtet. Dazu verfügt die Ausströmdüse über einen Strömungskanal, der von einem Gehäuse, beispielsweise aus Kunststoff und/oder Metall, gebildet ist und durch den das Fluid, z.B. eine Flüssigkeit, ein Gas oder ein sonstiges fließfähiges Medium, hindurchgefördert wird. Im Bereich einer Austrittsöffnung, an der der Fluidstrom aus der Ausströmdüse austritt, sind zur Ausrichtung des Fluidstroms mehrere parallel zueinander angeordnete Lamellen verschwenkbar gelagert. Unter anderem können die Lamellen jeweils um parallele vertikale oder horizontale Drehachsen verschwenkt werden.

Im Innenraum von Kraftfahrzeugen werden derartige Ausströmdüsen beispielsweise im Bereich eines Armaturenbretts angeordnet, um einen beheizten Luftstrom auf eine Scheibe zu richten, um diese beschlagsfrei zu halten.

Die DE 102 02 926 A1 offenbart eine Luftdüse mit einem Gehäuse und einem darin angeordneten Leitelement. Dabei dient das Leitelement sowohl zum Drosseln als auch zur Ausrichtung des aus der Luftdüse austretenden Luftstroms.

Im Weiteren beschreibt die DE 94 19 723 U1 einen Belüftungsauslass, insbesondere für Kraftfahrzeuge, wobei mehrere parallele Lamellen mit einer Koppelstange mechanisch derart miteinander gekoppelt sind, dass ein Bewegen der Koppelstange in einer gemeinsamen Verschwenkung aller Lamellen um den gleichen Winkel resultiert. Somit kann ein Luftstrom, der aus dem Belüftungsauslass austritt, in die gewünschte Richtung ausgerichtet werden.

Darüber hinaus zeigt die DE 202 09 004 U1 eine mit einem verstellbaren Lamellengitter versehene Lüftungsdüse, bei der die mehreren parallelen Lamellen mit zwei Koppelstangen mechanisch miteinander gekoppelt sind, wobei die Lamellen über daran angeformte Drehzapfen unmittelbar in einem Gehäuse der Lüftungsdüse gelagert sind.

Bei modernen Kraftfahrzeugen sind die Armaturenbretter insbesondere im Bereich eines Beifahrersitzes zunehmend in die Horizontale geneigt und stehen nicht mehr annähernd senkrecht, um zum einen ästhetischen Ansprüchen zu genügen und zum anderen ein geringeres Verletzungsrisiko für den Beifahrer zu erhalten. Bei diesen flach ausgerichteten Armaturenbrettern ist es mit den bekannten Ausströmdüsen jedoch praktisch nicht mehr möglich, einen Luftstrom in horizontaler und sogar nach unten weisender Richtung zu leiten, um beispielsweise einen Schoßbereich einer Person in gewünschter Weise zu temperieren.

Es ist Aufgabe der Erfindung, eine Ausströmdüse der eingangs genannten Art zu schaffen, die es erlaubt, einen austretenden Fluidstrom in einen größeren Winkelbereich zu leiten.

Die Aufgabe wird erfindungsgemäß dadurch gelöst, dass die Lamellen in Längsrichtung einen zweiteiligen Aufbau aufweisen.

Der Kerngedanke der Erfindung besteht darin, dass an sich bekannte Lamellen, die über eine Koppelstange mechanisch miteinander gekoppelt und mit einer Handhabe in an sich bekannter Weise verschwenkbar sind, nicht einen starren, einteiligen Aufbau aufweisen, sondern, in Strömungsrichtung durch die Ausströmdüse hindurch gesehen, einen zweiteiligen Aufbau aufweisen. Das bedeutet, jede der mehreren parallel zueinander angeordneten Lamellen bestehet aus zwei miteinander verbunden Einzelteilen, die jeweils für sich genommen einen Fluidstrom in einer bestimmten Richtung lenken. Hierzu können diese beiden Teile, die insbesondere symmetrisch ausgebildet sein können, an sich beliebig, bevorzugt jedoch wie im Folgenden beschrieben, miteinander verbunden sein, um das gemeinsame Verstellen aller Lamellen bzw. jeweils der beiden Teile über eine Koppelstange zu ermöglichen. Dabei wird der Fluidstrom von den ersten Teilen der Lamellen in eine erste Richtung und von den in Strömungsrichtung gesehen zweiten Teilen in eine andere Richtung gelenkt. Die beiden Teile einer Lamelle können beliebig miteinander verbunden sein, beispielsweise ist deren Herstellung im Zwei-Komponenten-Spritzgußverfahren oder eine Kopplung mittels einer Elastomerkomponente möglich.

Selbstverständlich kann der Ausströmdüse in an sich bekannter Weise eine Drosselklappe zugeordnet sein, um die Ausströmdüse zu verschließen, falls das Austreten des Fluids aus dieser Ausströmdüse momentan nicht gewünscht ist. Weiterhin können an der Ausströmdüse auch mehrere Gruppen von Lamellen, beispielsweise zwei Gruppen, die im Wesentlichen senkrecht zueinander ausgerichtet sind, vorgesehen sein, um einen Fluidstrom z.B. nach linkes/rechts und oben/unten zu leiten.

Der Vorteil der Erfindung liegt darin, dass durch die Zweiteilung der Lamellen ein Fluidstrom, insbesondere ein Luftstrom, bereits innerhalb des Strömungskanals einer Ausströmdüse in eine gewünschte Richtung umgeleitet werden kann, wodurch er unter einem größeren Winkel, in Längsrichtung der Ausströmdüse gesehen, abgelenkt werden kann. Somit ist es insbesondere bei Ausströmdüsen für Belüftungsanlagen in einem Innenraum eines Kraftfahrzeugs ermöglicht, einen Luftstrom aus einer Ausströmdüse, die in ein flach gestelltes Armaturenbrett eingebaut ist, dennoch in horizontaler Richtung oder sogar nach unten hin umzulenken.

Zur Befestigung der beiden Teile einer Lamelle aneinander sind zweckmäßigerweise diese beiden Teile über ein Filmscharnier einstückig miteinander ausgebildet. Hierzu kann eine Lamelle als einstückiges Kunststoff-Spritzgussteil hergestellt werden, wobei das Ausbilden eines Filmscharniers zwischen zwei Teilen der Lamelle dem Fachmann möglich ist. In gleicher Weise können die beiden Hälften der Lamelle über ein beliebig ausgestaltbares mechanisches Gelenk relativ zueinander beweglich miteinander verbunden sein.

Zur Bewegung bzw. zur Änderung der Winkelstellung der Lamellen greift in Ausgestaltung die Koppelstange zum gemeinsamen Verschwenken der Lamellen jeweils im Bereich des Gelenks bzw. des Filmscharniers an den Lamellen an, um sonach einen optimalen Anstellwinkel der Lamellen innerhalb des Strömungskanals der Ausströmdüse zu erhalten.

Um die Mechanik zum Verschwenken der Lamellen einfach zu halten, sind diese jeweils mit einem Teil ortsfest, aber drehbar an einem festen Punkt des Gehäuses gelagert. Beispielsweise kann ein an die Lamelle angeformter Zapfen in eine entsprechende Lageröffnung im Gehäuse der Ausströmdüse eingreifen, um die Lamelle bzw. deren eines Teil zu verschwenken.

Damit bei einer solchen Lagerung der Lamellen die Beweglichkeit der beiden Teile der Lamellen jeweils zueinander ermöglicht wird, ist jeweils an dem anderen Teil der Lamelle ebenfalls ein Zapfen ausgebildet, der in ein Langloch im Gehäuse der Ausströmdüse eingreift und beim Verschwenken der beiden Teile der Lamellen relativ zueinander jeweils entlang des Langlochs verschoben wird.

Vorzugsweise wird eine derartige Ausströmdüse zur Belüftung eines Innenraums eines Kraftfahrzeugs eingesetzt, wobei derartige Ausströmdüsen unter anderem in einem Armaturenbrett, einer Mittelkonsole oder an sonstigen Stellen im Innenraum des Kraftfahrzeugs angeordnet sind, um verschiedene Luftströme in gewünschte Richtungen zu leiten. Es ist für den Fachmann jedoch ersichtlich, dass derartige Ausströmdüsen auch auf allen anderen Gebieten der Technik eingesetzt werden können, um Fluidströme in gewünschte Richtungen zu lenken.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispiels unter Bezugnahme auf die zugehörigen Zeichnungen näher erläutert. Es zeigt:
- Fig. 1: eine perspektivische Ansicht einer zweigeteilten Lamelle einer erfindungsgemäßen Ausströmdüse,
- Fig. 2: eine perspektivische Seitenansicht der Ausströmdüse,
- Fig. 3: zwei perspektivisch dargestellte Positionen von verschwenkten Lamellen der Ausströmdüse und
- Fig. 4: die Ausströmdüse in perspektivischer Vorderansicht.

Die Ausströmdüse 1 umfasst ein insbesondere aus Kunststoff bestehendes Gehäuse 2, das einen Strömungskanal 3 bildet, durch den hindurch ein Fluidstrom, insbesondere temperierte Luft von einer Belüftungs- und Klimaanlage eines Kraftfahrzeugs, in Strömungsrichtung gemäß Pfeil S hindurchgefördert wird.

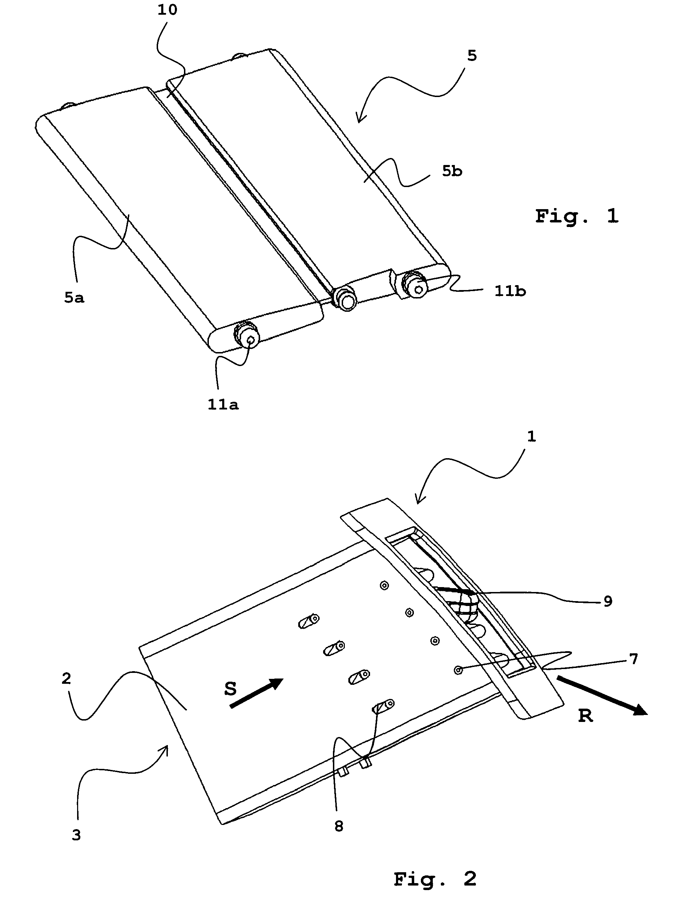

Zum Ausrichten des Fluidstroms dienen in an sich bekannter Weise mehrere parallel zueinander angeordnete Lamellen 5, die mit Hilfe einer Handhabe 9 über eine Koppelstange 6 gemeinsam verschwenkbar sind, um, wie in Fig. 2 dargestellt, einen aus einer Austrittsöffnung 4 austretenden Fluidstrom in Richtung eines Pfeils R nach schräg unten zu leiten.

Zur besseren Ausrichtbarkeit des Fluidstroms ist jede der Lamellen 5 in Längsrichtung zweigeteilt ausgebildet, wobei die beiden Teile 5a, 5b einer Lamelle 5 über ein Filmscharnier 10 gelenkig miteinander verbunden sind. In gleicher Weise können auch sonstige mechanische Gelenke zwischen den beiden Teilen 5a, 5b vorgesehen sein.

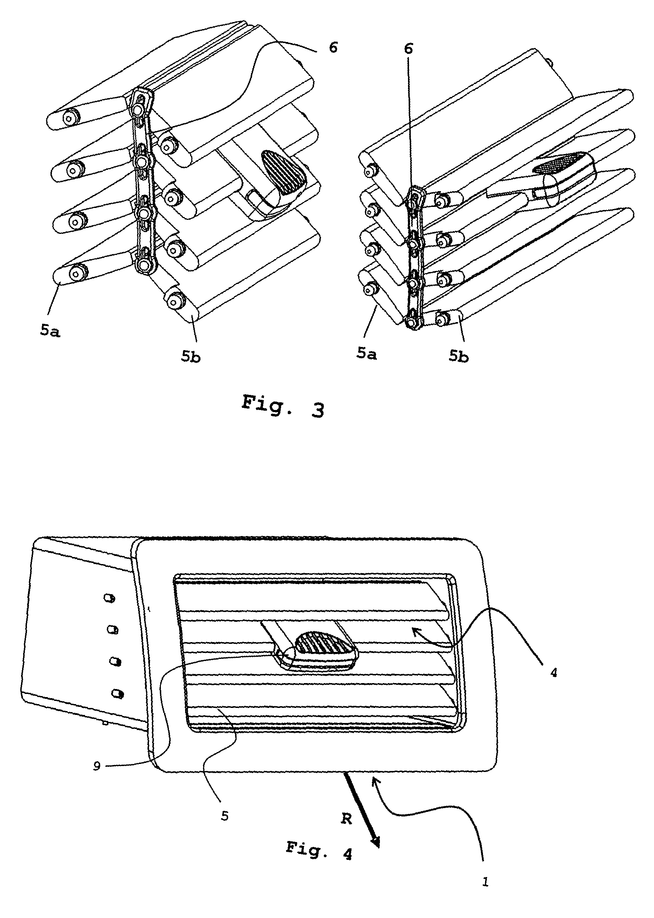

Zum Verschwenken der Lamellen 5 greift die Koppelstange 6 insbesondere im Bereich des Filmscharniers 10 jeweils an den Lamellen an, um, wie in Fig. 3 dargestellt, die Lamellen 5 gemeinsam nach oben oder unten durchzubiegen.

Zur Lagerung der Lamellen 5 weist jeweils das Teil 5b der Lamellen 5 einen Zapfen 11b auf, der in eine entsprechende Lageröffnung 7 im Gehäuse 2 der Ausströmdüse 1 drehbar aber ortsfest eingesetzt ist. Um die mehreren Lamellen 5 gemeinsam bewegen zu können, weist das andere Teil 5a der Lamellen 5 jeweils einen im Wesentlichen gleichartigen Zapfen 11a auf, der allerdings in ein Langloch 8 im Gehäuse 2 der Ausströmdüse 1 eingesetzt ist. Werden nunmehr die Lamellen 5 über die Koppelstange 6 jeweils nach oben oder unten durchgebogen, so verschiebt sich der Zapfen 11a im Langloch 8.

Mit einer derartigen Ausströmdüse 1 kann die Richtung gemäß Pfeil R, unter der der Fluidstrom aus der Ausströmöffnung 4 austritt, gegenüber dem Stand der Technik wesentlich vergrößert werden, wobei das äußere Aussehen der Ausströmdüse 1, wie aus Fig. 4 ersichtlich, praktisch unverändert ist. Insbesondere kann somit ein Warmluftstrom von einer Ausströmdüse 1, die in ein flach gestelltes Armaturenbrett in einem Innenraum eines Kraftfahrzeugs eingebaut ist, dennoch nach schräg unten ausgerichtet werden.

### Bezugszeichenliste

- 1.: Ausströmdüse
- 2.: Gehäuse
- 3.: Strömungskanal
- 4.: Austrittsöffnung
- 5.: Lamelle
- 5a: Teil der Lamelle
- 5b: Teil der Lamelle
- 6.: Koppelstange
- 7.: Lageröffnung
- 8.: Langloch
- 9.: Handhabe
- 10.: Filmscharnier
- 11a: Teil der Lamelle
- 11b: Teil der Lamelle

- S: Pfeil
- R: Pfeil

## Patentansprüche

1. Ausströmdüse für ein Fluid mit einem von einem Gehäuse (2) gebildeten Strömungskanal (3) und mehreren im Bereich einer Austrittsöffnung (4) vorgesehenen parallelen Lamellen (5) zur Ausrichtung eines Fluidstroms, wobei die Lamellen (5) zur gemeinsamen Verschwenkbarkeit mit einer Koppelstange (6) mechanisch gekoppelt sind, **dadurch gekennzeichnet, dass** die Lamellen (5) in Längsrichtung einen zweiteiligen Aufbau aufweisen.

2. Ausströmdüse nach Anspruch 1, **dadurch gekennzeichnet, dass** die beiden Teile (5a, 5b) jeder Lamelle (5) über ein Filmscharnier (10) und/oder über ein Gelenk miteinander verbunden sind.

3. Ausströmdüse nach Anspruch 1 oder 2, **dadurch gekennzeichnet, dass** die Koppelstange (6) im Bereich des Gelenks bzw. des Filmscharniers (10) an den Lamellen (5) angreift.

4. Ausströmdüse nach einem der Ansprüche 1 bis 3, **dadurch gekennzeichnet, dass** die Lamellen (5) an einem Punkt am Gehäuse (2) ortsfest aber relativ dazu verdrehbar gelagert sind, insbesondere über einen Zapfen (11b), der in eine Lageröffnung (7) im Gehäuse (2) eingreift.

5. Ausströmdüse nach Anspruch 4, **dadurch gekennzeichnet, dass** im Gehäuse (2) Langlöcher (8) für Zapfen (11a) der Lamellen (5) ausgebildet sind.

6. Kraftfahrzeug mit einem Innenraum, **dadurch gekennzeichnet, dass** ein Luftstrom mit Hilfe einer Ausströmdüse (1) nach einem der Ansprüche 1 bis 5 in den Innenraum leitbar und in gewünschter Richtung ausrichtbar ist.
